# EUROPEAN PATENT APPLICATION

(11) **EP 1 509 001 A1**
(43) Date of publication of application: **23.02.2005**
(21) Application number: 03255216.8
(22) Date of filing: 22.08.2003
(51) Int. Cl.: H04L 12/28, H04L 12/26, G06F 17/60, H04L 12/14

(54) **Dynamic network resources allocation and consolidation method**

(71) Applicant: DBAM Systems Ltd., Leeds LS15 (GB)
(72) Inventor: Ohanlon Shane DBAM Systems Ltd., Leeds Ls15 (GB)
(74) Representative: Waddington, Richard

(57) **Abstract**

One idea -among several described in this application- for dynamic network resources allocation and consolidation is a method of adjusting connection characteristics for a connection between a first, user, computer and a remote second computer comprises providing to a user a dynamic connection characteristics user interface for the first computer, which allows the user to adjust one or more connection characteristics dynamically.

## Description

This invention relates to a method and system (called exbander) for allowing dynamic and variable connection characteristics for computer communications.

At present, a user is limited to the supply of a limited range of bandwidth availability, which corresponds to a download bit rate. Different bandwidths are available, but only on the basis of resetting the bit rate to a fixed level for a fixed period of time.

It is an object of the present invention to overcome the abovementioned disadvantage.

According to a first aspect of the present invention a method of adjusting connection characteristics for a connection between a first, user, computer and a remote second computer comprises providing to a user a dynamic connection characteristics user interface for the first computer, which allows the user to adjust one or more connection characteristics dynamically.

The method may include the user receiving a selected service with no interruption to the service other than changing the connection characteristics.

The provision of means by which a user may adjust connection characteristics, which may include a connection bit rate, provides advantages in allowing a user to adjust connection characteristics for a chosen period of time, which may include the increase and decrease of connection bit rate as desired.

The connection may be an internet connection, preferably provided by a service provider, such as an internet service provider, a telephone company, a cable provider or a community internet group.

The user's computer may be a personal computer, a set top box, a gaming console, a personal digital assistant (PDA), an advanced telephone or any IP aware network device.

Connection characteristics, such as bandwidth, have previously been available by renegotiating a connection contract, but dynamic connection characteristic control, at the option of a user, is particularly advantageous.

The connection characteristics may be variable and bit rate, for example, may range from between 0 to any level as determined by the connection provider, such as between approximately 56 kb/s and approximately 2048 kb/s, preferably between approximately 128 kb/s and approximately 1024 kb/s.

The connection is preferably one to one or one to many. The negotiation is preferably between a customer device and head end equipment of a service provider or the like.

The user interface preferably indicates a bandwidth/connection bit rate and a cost for a particular bandwidth/connection bit rate, with other information preferably being available for presentation as an optional feature.

A user's connection to the second remote computer may have a cap on an amount of data transferable in a particular time period, in which case the user interface may display an amount of data transferred, preferably in conjunction with the data transfer limit.

The method may include a user paying in advance for a given amount of connection characteristic variability, such as bandwidth, which connection bandwidth may be a time period or amount of data transferred. The time period may be for a given connection bit rate, or may be scaled according to connection bit rate, i.e. less time for a greater connection bit rate. The pricing of the connection may differ depending on supply and demand on the network and would preferably be capable of being set by the exbander system.

The payment in advance may be made by coupon, which may bear a code for entry into the first computer to access a desired connection, or may be an electronic coupon to access a desired connection, or may be an electronic coupon to be submitted to a service provider controlling the second computer.

The allocation of connection characteristics is preferably performed by a bandwidth broker, which is preferably remote from a user and is preferably the second computer. The bandwidth broker is preferably operable to control a user connection device to allow a given connection characteristic, such as connection bit rate. The user connection device may be a cable modem/DSL modem/Wireless access point. Alternatively, the bandwidth broker may control a user's connection characteristics, such as bit rate, by a kernel-based packet filter, which uses a queuing methodology. Alternatively, the bandwidth broker may control a user's connection characteristics using an Ethernet switch.

Preferably, a user's connection characteristics are changed dynamically, without having to reset a user's connection equipment

The invention extends to a bandwidth broker as described in the first aspect.

According to a second aspect of the invention a system for adjusting connection characteristics between remote computers comprises:
a user computer; and
a service provider computer;
wherein the user computer is provided with a dynamic connection characteristics user interface, that is operable by a user to adjust at least one connection characteristic dynamically.

The service provider computer preferably controls a user's access to a connection characteristic, such as bandwidth, requested by the user. Preferably, the service provider computer controls the user computer, or a device, such as a connection device, communicating with the user computer.

According to a third aspect of the invention a method of analysing requests for dynamic adjustment of connection characteristics comprises:
logging requests for given connection characteristics from a plurality of users, including a time of said requests; deriving a level of demand for at least one level of connection bandwidth; and
setting a cost of said connection characteristics based on said level of demand.

The connection characteristics may include, duration, cost amount, type of traffic, requested services, connections utilisation

The cost may be set based on costs set for different levels of demand. For example time periods with a lower demand preferably have a cost set that is lower than a time period with higher demand.

The cost is preferably a cost for a given period of time of connection at a given connection characteristic, such as bandwidth.

The method may include a software element logging user connection characteristics change requests. The software element preferably communicates the information to a remote computer, 1 preferably a service provider computer.

The service provider computer is preferably a bandwidth broker, as defined in the first aspect.

The method may include determining one or more of the following features: average rate of change of user uptake of a given connection characteristic, user uptake of given connection characteristics at given times, trend analysis of user uptake of given connection characteristics in response to the setting of a particular cost, and/or the number of users commencing use of or ending use of an offered connection characteristic. A subset of the results of any query may be based on geographical attributes of the data, or connection characteristic take-up.

In the third aspect of invention the service provider's computers are also modelled as producers of the commodity bandwidth. They are modelled so as to create relations between the investment in the service provider computer and the revenue gained from the investment. E.g. the return of investment of service provider network equipment.

The invention extends to a method of offering given services based on a dynamic connection characteristic that a user is using. Preferably, the services are gaming services and the user is offered a gaming service, which may be a gaming service in which a plurality of independent users takes part. Thus, users with the same connection bandwidth are offered the same gaming opportunity.

According to a fourth aspect of the invention, a method is provided by which at least one of a user's connection characteristics are automatically adjusted according to the requirement of a particular application being used by the user.

The advantageous use of dynamic connection characteristics provides the significant benefit of adjusting characteristics, such as bandwidth, according to requirements. Thus for example, when less bandwidth, or connection bit rate, is required less cost can be incurred by subscribing to a lower cost connection.

The user's connection characteristics may be provided by one of a plurality of potential service providers, in particular the method may include automatically switching between service providers.

The method may incorporate the use of an address supply element, operable to supply allocated addresses to the different service providers (SP) as switching between service providers is used. The address supply element for each SP may be a DHCP server. Requests are preferably brokered from a bandwidth broker to the DHCP server via a DHCP relay agent

The method may include the creation of a virtual network interface for each of the plurality of services providers.

The invention extends to a system for implementing the fourth aspect comprising at least one user computer and a bandwidth broker.

All of the features described herein can be combined with any of the above aspects, in any combination.

For a better understanding of the invention, and to show how the same may be brought into effect, reference will now be made, by way of example, to the accompanying diagrammatic drawings, in which:

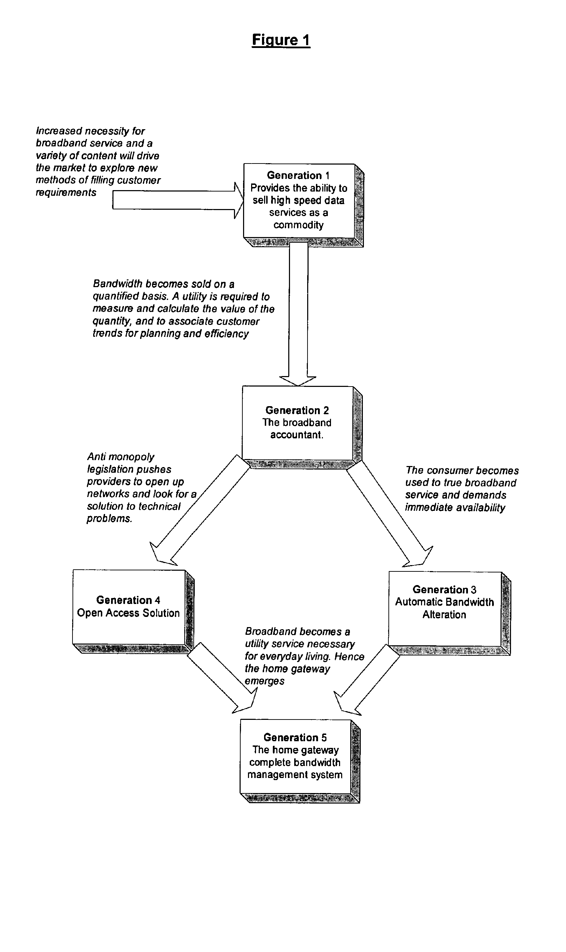

Figure 1 is a schematic diagram showing different types of dynamic bandwidth allocation;
Figure 2 is a schematic view of a user interface for adjusting bandwidth dynamically;
Figure 3 is a further view of the interface of Figure 2 showing account information;
Figure 4 is a further view of the interface of Figure 2, showing messaging information;
Figure 5 is a schematic diagram of connections and information flow for an online gaming service;
Figure 6 is a table of relevant factors for dynamic bandwidth allocation;

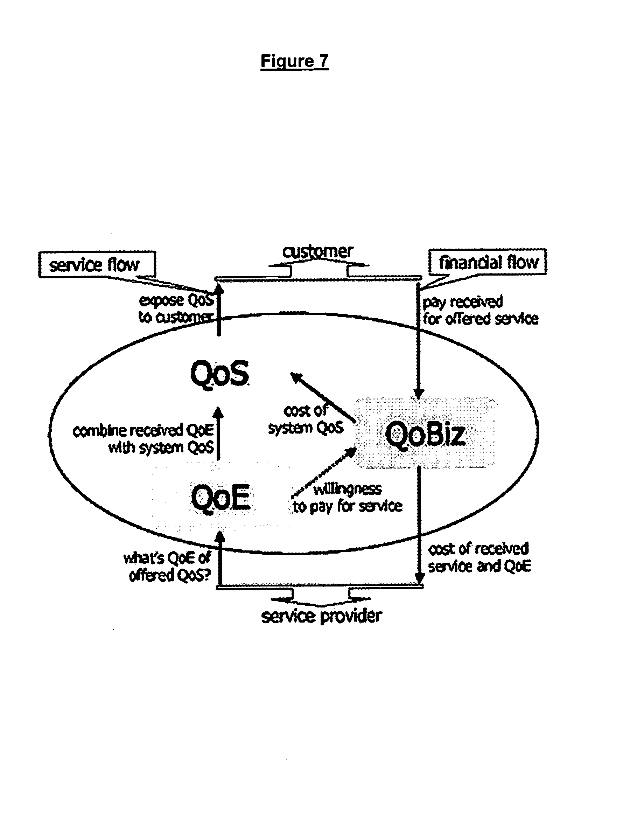

Figure 7 is a schematic diagram of the interrelationship between the relevant factors of Figure 6;
Figure 8 is a schematic diagram of a user interface showing a service utilization summary;
Figure 9 is a schematic bar chart of service upgrade costs at different times of day in conjunction with service uptake details;
Figure 10 is a schematic diagram of the architecture of a bandwidth allocation system;

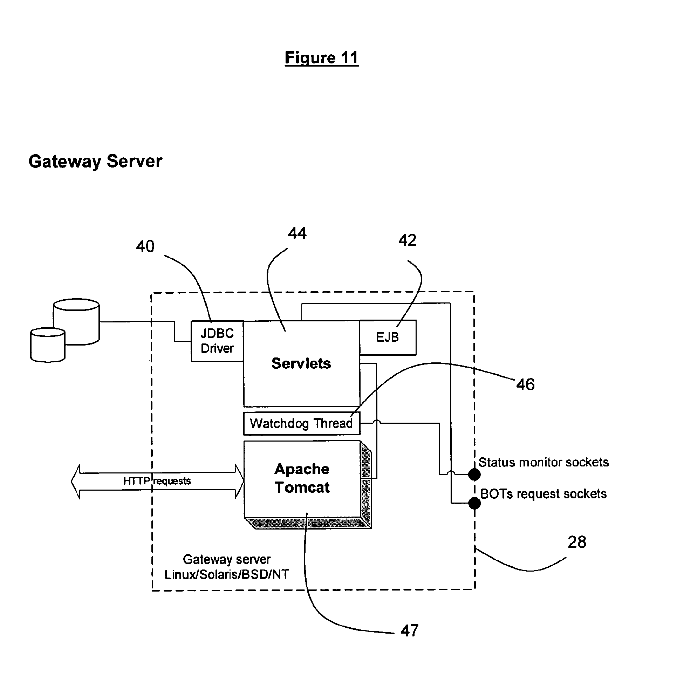

Figure 11 is a schematic representation of the internal elements of an exbander element of the system shown in Figure 10;

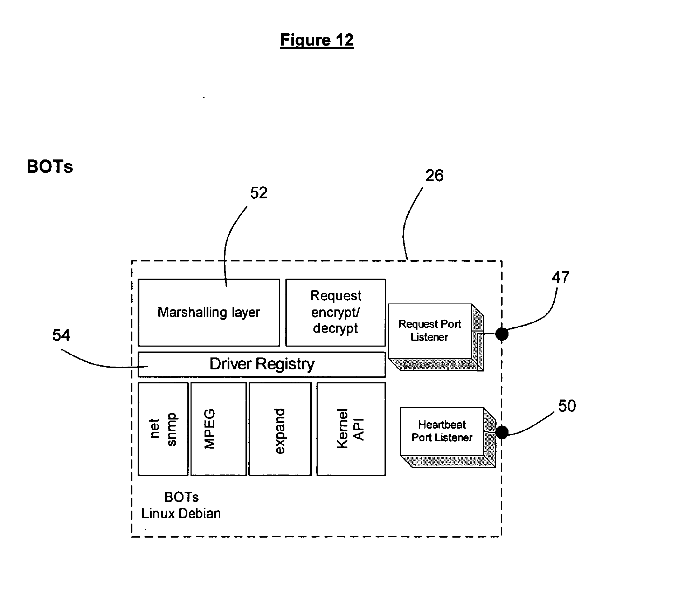

Figure 12 is a schematic diagram of the internal elements of a bandwidth on tap server in Figure 10; and
Figure 13 is a schematic diagram of a DHCP relay agent.

A system for dynamically adjusting computer connection characteristics combines several components, the aim of which is to deliver an application that shapes network traffic in accordance with criteria defined by both a consumer and a service provider. Delivering such an application means maximizing revenue from the service and increasing consumer satisfaction by applying technical control of the bandwidth of communications links between a supplier and a user.

Exbander does not just change the bit rate of a user's connection, but also changes characteristics of the connection to make it suitable for different types of applications like gaming or telephony. One such characteristic is the scheduling type; others include jitter, burst, max. burst and Type of Service (ToS). Here are some of the scheduling types used; a connection can have a combination of these services operating simultaneously.

Unsolicited Grant Service: fixed bursts of data at a guaranteed rate and with a guaranteed level of jitter by providing periodic transmission opportunities. This kind of service is more suitable for Voice over IP applications.

Real-Time Polling service: Periodic opportunity is given to the device to request permission to transmit data by polling the device for a bandwidth request. This is suitable for real time data transmission and so for applications like MPEG video over IP.

Unsolicited grant service with active detection: uses fixed size and fixed rate transmission but has significant periods where no data are being sent. This is suitable for applications such as voice over IP, where 50% or more of the call may be silence.

Non real time polling service: this applies to applications that have no requirements for real time service but may need high level of bandwidth such as Internet gaming applications.

Where users are limited to the supply of a single connection, exbander allows the user to select a bit rate of choice within a range set with upper and lower limits.

The evolution of the system follows the applicant's vision of how the broadband market will evolve over the next five to eight years. All generations of the system are applicable to common transport protocols and technologies such as xDSL (Digital subscriber lines), DOCSIS (Data over cable service interface specifications), WiFi (a wireless radio communication protocol, also known as IEEE 802-11.b/g/a) , and UMTS (Universal mobile telecommunications system).

### Generation 1: Bandwidth Control

Consumers want control over their Internet experience. With exbander, a consumer (a user of a network who consumes network resources such as bandwidth) can dictate the characteristics of their network connection. Characteristics such as peak consumption rate, the latency of the connection (referred to above at in the reference to scheduling type latency. Jitter, burst are also part of the scheduling type), and bit rate can be manipulated with ease.

The consumer controls the bandwidth through a graphical user interface (GUI). This interface is available through a number of presentation technologies such as HTML, Java Swing Applet/Application, gaming console interfaces, and j2EE.

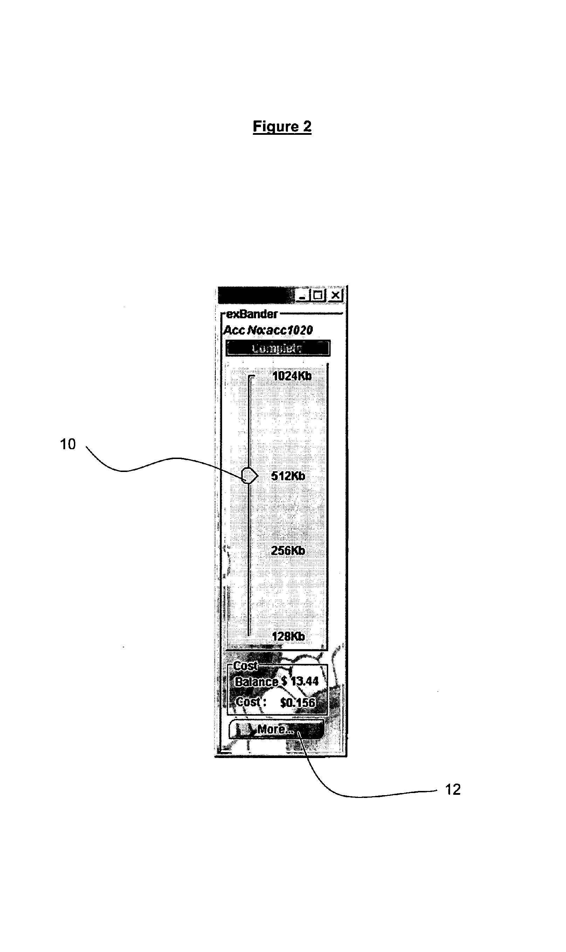

Figure 2 is an example of the Java application version. This version installs on a consumer's computing device, such as a personal computer or personal digital assistant (PDA). Consumers control the bandwidth connection rate by moving a slider bar 10 control. The GUI concurrently informs the user of the cost of the connection rate and the resulting account balance.

Exbander's GUI sends and receives messages from a Bandwidth on Tap server (BOTs - this server implements multiple management and transmission protocols and technologies in order to control consumer bandwidth characteristics and is described below) using the HTTP over SSL protocol. Using this protocol ensures client security and easier firewall pass through connection negotiation.

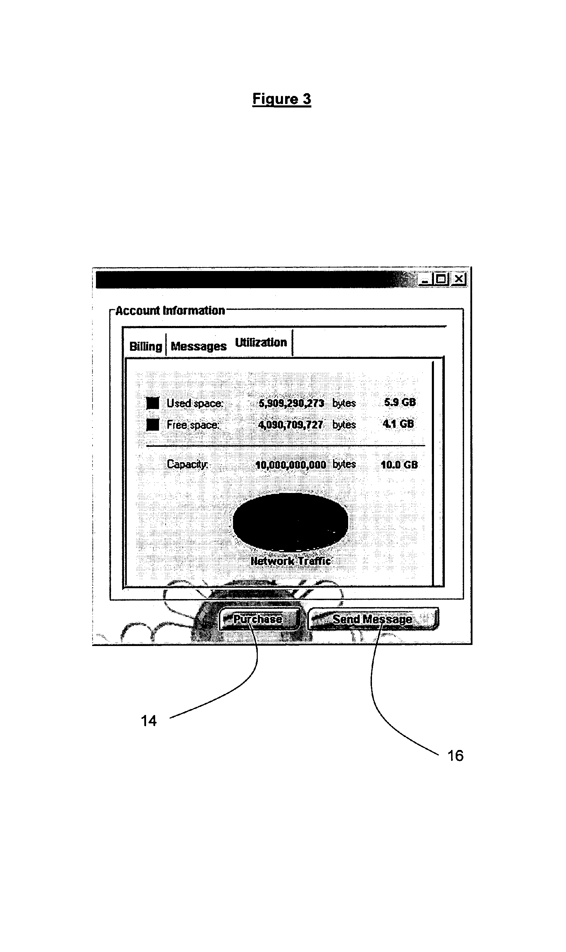

By clicking on a "More..." button 12, the consumer is provided with additional information regarding account status. A number of other details and controls are also presented (see Figure 3), such as utilization and consumer instant messages, offering service providers (a provider is an organization such as Internet service providers (ISPs), telephone companies, cable companies, or community Internet that provides a network for consumers) a novel means of communicating marketing messages directly to their best customers.

A utilization screen (see Figure 3) allows consumers to view the amount of bandwidth consumed, or data traffic flow, or other billable consumption for connection characteristics in a given billing period. In Figure 3 the graphic shows that 5.9 GB out of 10GB of available traffic flow has been used. Many providers have implemented usage capping, whereby a consumer is limited to consuming a fixed amount of network traffic in a billing period. The presentation of bandwidth viewed allows a user to more easily judge how close they are to the applied cap. A consumer may also purchase additional network capacity from this screen (using button 14).

Consumers can also send messages to and receive messages from the provider. A provider would send a message to a consumer if a new product (an implemented definition of connection service characteristics; e.g., a bronze package) became available, or if connection resources, which the consumer previously attempted to purchase, became available. A consumer could send a message to a provider using button 16 for service queries or with technical issues regarding provider devices or applications.

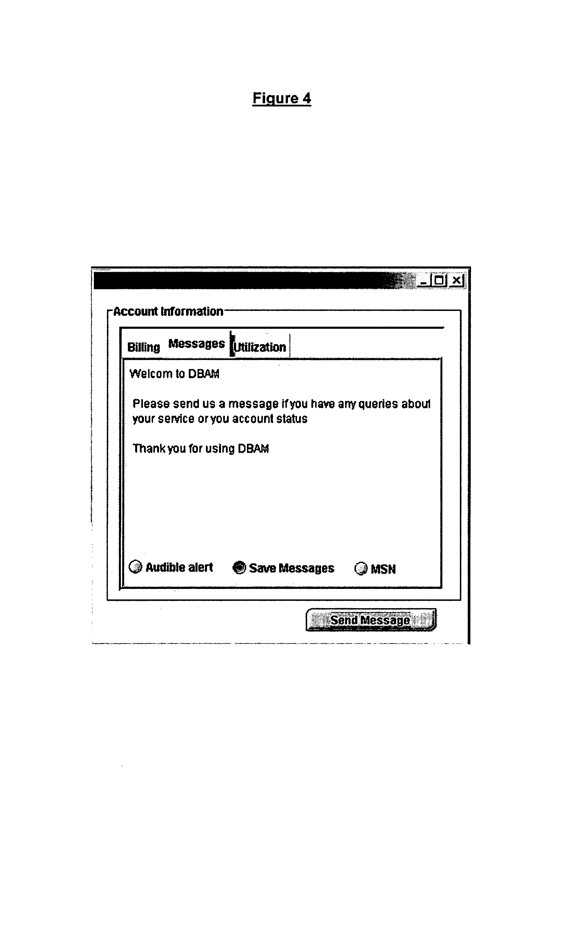

Figure 4 shows an example of a messages tab of the exbander GUI.

### Pay as you go

Exbander also opens the market for a "Pay as you go" model for selling broadband services. A consumer will purchase an electronic coupon or a coupon bearing an access code from a wholesaler or retailer or may receive coupons as part of promotional exercises. The coupons may be implemented in a similar manner to coupons currently used for mobile telecommunications. Exbander will verify the coupon or pass it to the governing body that issued the coupon for verification. Exbander will then create a digital certificate. The certificate is then passed to BOTs and the services respective to the certificate are created. The certificate may expire based on usage or duration, and the consumer will be informed of the availability of remaining service at predefined intervals. Upon expiration of the coupon, exbander will remove the service. The certificates are digital certificates which are encrypted blocks of data of arbitrary size which have encoded information required to gain validation to access a media with the service details embedded in the key.

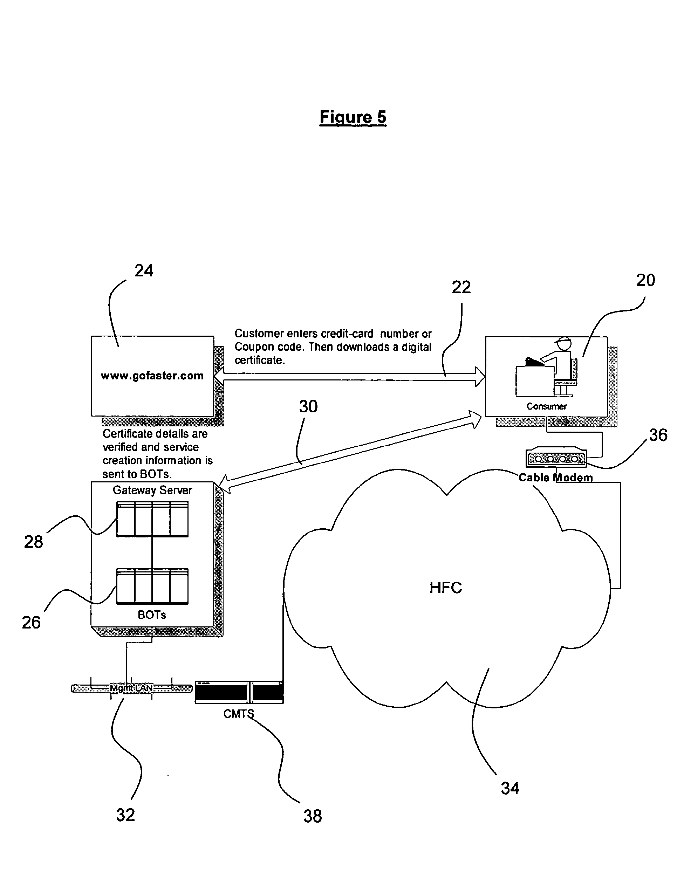

Figure 5 shows a typical structure for the exbander system. A user 20 enters a credit card or coupon number at arrow 22 and supplies it to a provider 24 of the exbander system (e.g. gofaster.com). Certificate details are verified and service creation information is sent to a bandwidth-on-tap server (BOTs) 26, which is protected by a gateway server 28. The bandwidth allocation and requests for the same may be communicated directly between the user 20 and the gateway server 28. A management LAN 32 and cable modem termination system (CMTS) 38 communicate with the BOTs 26 and a hybrid fibre coaxial (HFC) or cable network 34. A cable modem 26 connects the user 20 and the HFC 34.

An example implementation of the exbander system is as follows. As is well documented in recent years one of the biggest drivers for improvement in PC and Internet technology has been online gaming. The gaming industry creates new requirements for faster connection and PC's. The advent of broadband has led to a rapid improvement in the quality of gaming over the Internet. One of the problems games developers have had is how to have a single game environment where users of different connection bit rate and latencies can play together without having significant chasm of performance between players. Among this user demographic the quality and bit rate of your connection and hardware is all important and gamers brag with each other about their system and connection specifications.

This key group of broadband users would be likely target groups for the operators adopting the exbander product suite. These are the early technology adopters and any new technology, which improves the overall gaming Experience is generally quickly snapped up.

Although currently implemented in a patchy way, tiered gaming based on connection bit rate and latency exists. By allowing users to play only against users of a similar latency and bandwidth (supported by exbander's ability to give them the ability to change this in real time) would allow operators to own the 'gaming experience' and generate selling opportunities where gamers would upgrade their connections during online tournaments.

More and more users will be using broadband connections to play games online with their consoles. This puts the Console Manufacturers in a strong position to own broadband connectivity into the home. The possibilities of revenue sharing with Operators especially in an Open Access environment would be attractive. As the Manufacturers own the online gaming experience but not the network quality this would potentially allows them to own the end to end gaming experience - to put the controls in the hands of the end user to choose their own gaming quality.

Gaming software developers have needed to become network engineers overnight to ensure end users get the best possible experience.

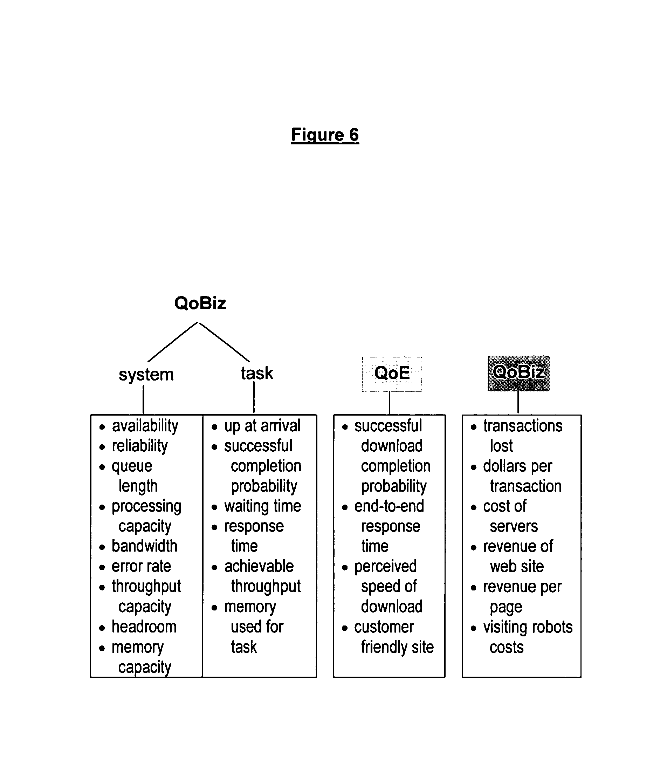

Figure 6 classifies the main parameters that are relevant to evaluating an Internet based service's level of quality. Although quality of business (QoBiz) is out of this document's scope, by analysing the different parameters we can easily distinguish between the parameters that we can technically measure and the others that are more related to the customer's experience and then depend on the person. QoBiz would be how online gaming vendors would measure the success of their business, quality of experience (QoE) measures the successful delivery of their services to end users and quality of service (QoS) is the technical capability inherent in the network and systems to affect the customer's experience.

Regarding this differentiation, we can define QoS metrics, as the *"objective"* part of quality evaluation while QoE, as its name illustrates, is more *"subjective".*

Operators deliver the technical platform or service delivery platform for services. In the case of online gaming it is important the technical platform can be optimised to suit the service. Adding the exbander client to a games console allows manufacturers offering services to effectively control the broadband experience to suit the application. This is an extremely powerful position for them to be in.

In addition to shaping traffic to optimize availability (setting higher class of service to paying gamers) the other two important to measure aspects affecting gamers is latency (network and service response time) and throughput. Exbander allows the user to increase their throughput by increasing the available bandwidth to the application. Latency is not something easily optimized as things such as network delay are fixed by the distance between host and server, number of router hops (packet delay due to packet processing and routing) which are not easily changed.

### Bandwidth On Tap Server (BOTs)

The BOTs 26 is a daemon (a process on a computer that runs constantly). It implements a number of transmission and management protocols and technologies (such as SNMP, COPS, DSX, MPEG, DOCSIS, UMTS, DSL, WiFi, TCP, SIP, and RSVP) in order to control the bandwidth at the device layer. The initial protocols implemented by BOTs 26 are those to support the control of DOCSIS 1.0 and 1.1 devices.

Unlike DOCSIS 1.0, DOCSIS 1.1 has a mechanism for controlling the bandwidth of the customer devices. However, this mechanism is hidden from contemporary management protocols like SNMP (see www2.rad.com/networks/1995/snmp/snmp.htm for more information). It is only available through the DOCSIS MAC layer by means of DSX (a name given to a protocol for Dynamic Service Operations... e.g., DSA (Dynamic Service Addition), DSC (Dynamic Service Change etc). Most CMTS (cable modem termination system) vendors provide a proprietary access mechanism to this layer. Where suitable, exbander implements these access mechanisms.

A more generic and cost effective solution for controlling the bandwidth for small (fewer than 1000 subscribers) providers is a kernel-based packet filter (the packet filter is a Linux advanced routing and traffic control system, reference http://lartc.org/). In this solution, bridged packets are queued dependent on a weight assigned to the traffic type or source, using knowledge that for example traffic from IP 10.2.1.2 belongs to account 123455. The user request from the exbander user interface is for 1024 kb/sec. Therefore this would be put into the 1024 kb queue, which controls when the packet is relayed.

Similarly, advanced Ethernet switches provide a traffic queuing mechanism. The management of these queues is exposed to network management systems, usually via SNMP or a proprietary management protocol, such as the command line interface of a Terayon's Teralink headend or com21's HCX or com21 NMAPS4 API.

In most cases where vendors provide a mechanism to control bandwidth it is made available through the command line interface. Exbander can connect to this interface and issue commands to the head-end device.

### Generation 2: Service Utilisation Scheme

### Theory of operation

Exbander's second generation models the principles of economic operation. The goal of this modelling is to predict future events, which translate into consumer requirements. It answers the questions What do you want? When do you want it? and How much are you willing to spend?

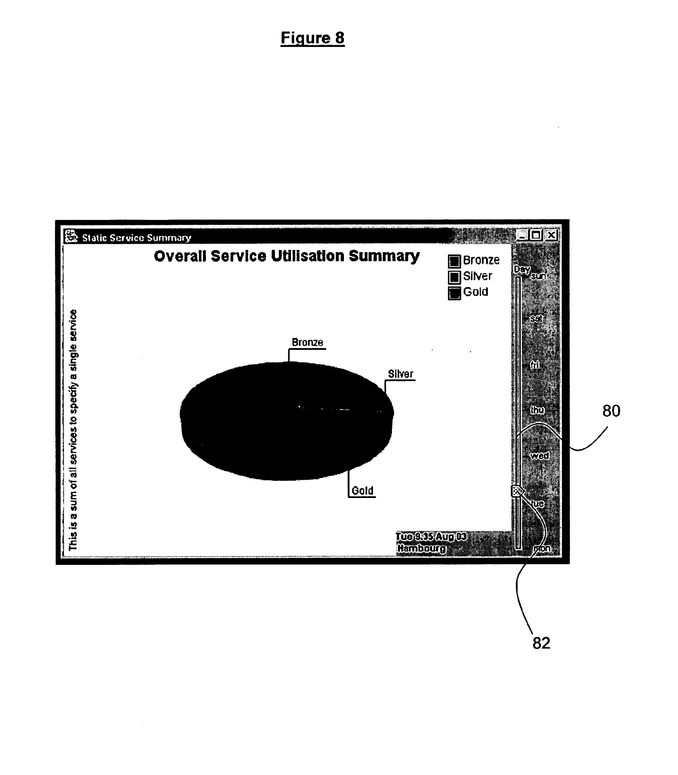

Figure 8 shows a display from the service utilization scheme. An overall service utilization summary is given in which three levels of service (gold, silver and bronze) are shown in conjunction with a proportion of total take up that those levels have achieved. A time bar 80 allows a slider 82 to be moved by a user to look at service utilization for different times in a week.

The service utilization scheme can be installed as a piece of software on PCs and laptops. It offers a view of customer requirements and bandwidth availability. It is the means by which bandwidth cost plans can be designed, giving providers the ability to recognize and exploit customer trends by modelling a cost structure to maximize revenue.

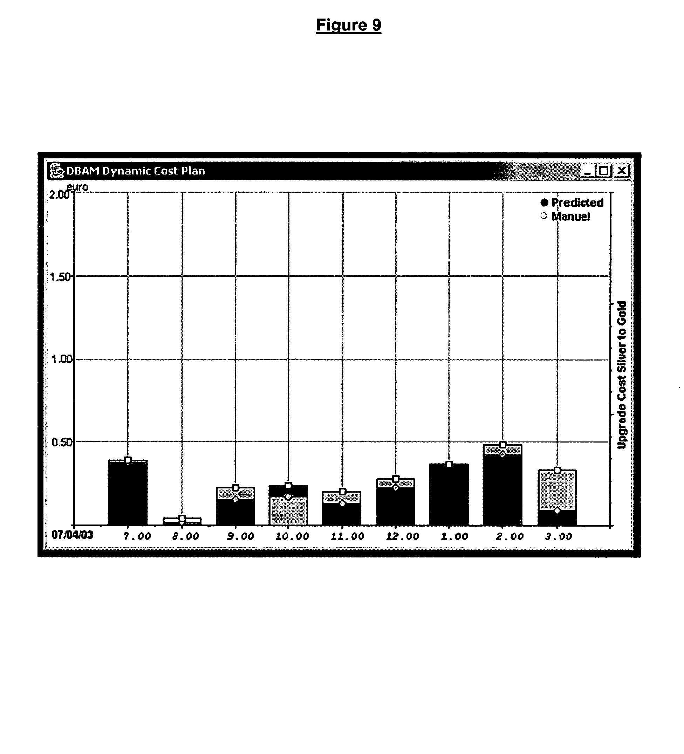

Figure 9 displays a dynamic cost plan wizard. The dark shaded area represents the service utilization scheme predicted upgrade cost. The light shaded area shows upgrade cost assigned by a user (a provider employee or representative).

The service utilization scheme is a portable application that can be installed on PC's and laptops.

### How does it do it?

The BOTs 26 provides the raw data in a relational database (Table 2.1). Details of account number, date, duration of service provided, a service identifier and status are given.

**Table 2.1**

| **Account Number** | **Date** | **Duration** | **Service Identifier** | **Status** |
|---|---|---|---|---|
| *Acc101201* | *29-10-03 01:32:21* | *2* | *11* | *Granted* |
| *Acc102201* | *29-10-03 01:32:23* | *1* | *12* | *Granted* |
| *Acc221201* | *29-10-03 01:32:24* | *5* | *0* | *Failed* |
| *Acc131201* | *29-10-03 01:32:29* | *1* | *72* | *Granted* |

A group of algorithms are scheduled to iterate over the data and derive key statistics. The ability to idealize a network as described here is only made possible by unitizing the service; i.e., by adhering an inherent value to each quantity of the service at that time. Statistics such as
- Average rate of change of consumer service levels at any given time. This is the statistic that will help define the times at which consumers are most willing to spend money.
- Service grouping. Allow providers to determine what type of service upgrades are used at any given time. For example, if consumers routinely choose to upgrade to a higher *gaming level of service, a provider will know that* at *3.00 on every Sunday, 200 consumers want a gaming service.*

Coupling the average rate and service grouping statistics illuminates what type of service is most valuable on the network at what time. Finding the balance between these services is the key to exploiting revenue opportunities.
- Asset analysis. Table 2.1 shows "Failed" in the Status column for Acc221201. Failed status indicates at the time BOTs 26 attempted to create the service on the consumer device, the bandwidth supply equipment did not have the requisite capacity available. Using the financial metaphor, the bandwidth supply equipment can be viewed as a producer of a commodity (bandwidth). In a production failure situation, investment is required to create more of the commodity. The service utilization scheme must quantify the potential market, after which the operator makes the decision whether the return on the investment is sufficient to validate the investment. The second generation exbander enables the decision-making providers need to exploit revenue opportunities.
- Trend analysis leading to dynamic cost plans. An example: The service utilization scheme knows at time A that 300 consumers used a constant bit rate service (perhaps for streaming video or gaming service) and were willing to pay Z. The service provider would like to know how much consumers are willing to spend at time B. The service utilization scheme, reviewing historical data, recommends the provider should charge Y during time B. The service utilization scheme calculates Y by extrapolating the knowledge that 300 consumers were willing to pay Z at time A, where B is similar to A. Y is then derived from Z+P, where P is an incremental amount. The provider has the choice whether to accept the service utilization scheme's advice. The service utilization scheme will then calculate if the revenue generated at time A is greater than the revenue generated at time B, and base future predictions partially on this result. The accountant constantly tries to define the notion of what consumers are willing to spend for what service.
- Consumer Flux. As consumers are added and subtracted to the network, the service utilization scheme answers questions arising from these events.

For additions: What are new consumers looking for? Are gaming services, a video service, general surfing, or FTP services wanted? Does the network require investment to keep up with this trend? The service utilization scheme knows how much potential bandwidth supply equipment has to produce a particular service by analyzing previous events and from some user input. The BOTs 26 can also test the link bit rate by means of a third party application, such as BING, by sending large ICMP packets from a client to a host and measuring the throughput

For subtractions: Why did a consumer unsubscribe from the network? Usage analysis is key: if the subscriber did not ever upgrade, then perhaps the consumer was not a heavy user or was uninformed of compelling content. Perhaps the base service is too expensive. Conversely, if the consumer did occasionally upgrade, perhaps the service quality was poor or too expensive. The answers to such questions are added to a trend analysis supporting either hypothesis.

Consumer flux also leads to deducing the reliability of historical data. For example, if there are 300 consumers in an area and 200 more are added in a month, the reliability of the predictions is low. However, if only two consumers are added in a month, then the reliability of the predictions is relatively high.

### Generation 3: Consumer auto bandwidth alteration.

Each consumer has the exbander consumer application operating on his or her CPE device (a CPE device in this context means a personal computer, set top box, gaming console, PDA or advanced telephone). The application is capable of defining what bandwidth characteristics suit the consumer requirements. For example, the consumer starts up a media player. The media player connects to e.g. http://www.mp3.com (or iTunes) and attempts to download an mp3 file. Exbander obtains the requirements for this type of traffic and, upon request by the consumer, attempts to create the service. Before creating the service, exbander searches for the most cost effective service suitable for the traffic. Thus the consumer is guaranteed the best online experience at the most cost effective price.

Content applications providers such as media players, Web browsers, and games will be provided with an open standard for defining bandwidth characteristics, categorized by minimum, preferred, and optimum bandwidth characteristics suitable for their application. In the absence of this information exbander will attempt to predict these characteristics.

### Generation 4: Open Access

Each consumer has the exbander consumer application operating on his or her CPE device. When the device registers on the network through DHCP (Dynamic host configuration protocol), a DHCP option is sent to the device, which exbander receives. This option is called the service-info-server, and contains the IP or hostname of a server that holds information regarding local service providers and their service offerings.

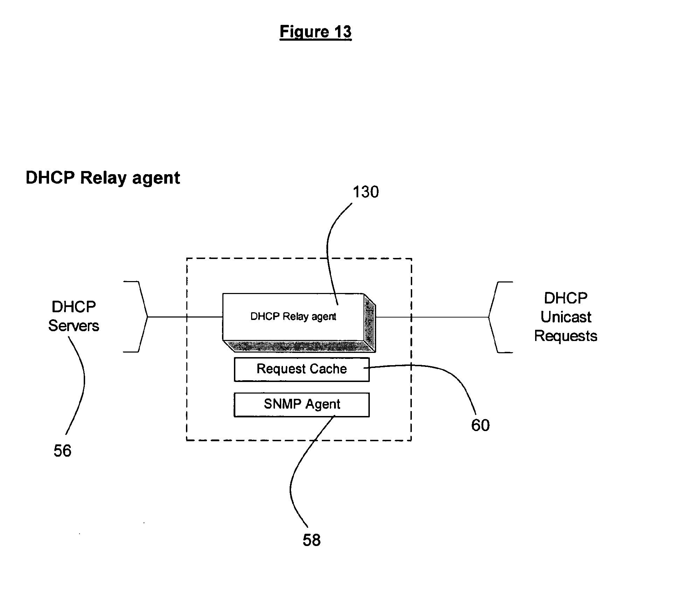

This server may also be a DHCP relay agent 130 as shown in Figure 13. Exbander requests IP addresses from the relay agent, which forwards the requests to the ISP's DHCP server. Exbander creates interfaces on the CPE device assigning MAC addresses to the interfaces. Each one of the interfaces is assigned to an ISP. Only one interface is live ("UP") at any given time. The interfaces are brought "UP" and "DOWN" depending on which ISP the consumer or "Consumer auto bandwidth alteration" dictates. Hence a consumer can dynamically change ISPs with minimal interruption to the application layer.

### Generation 5: Home bandwidth control center

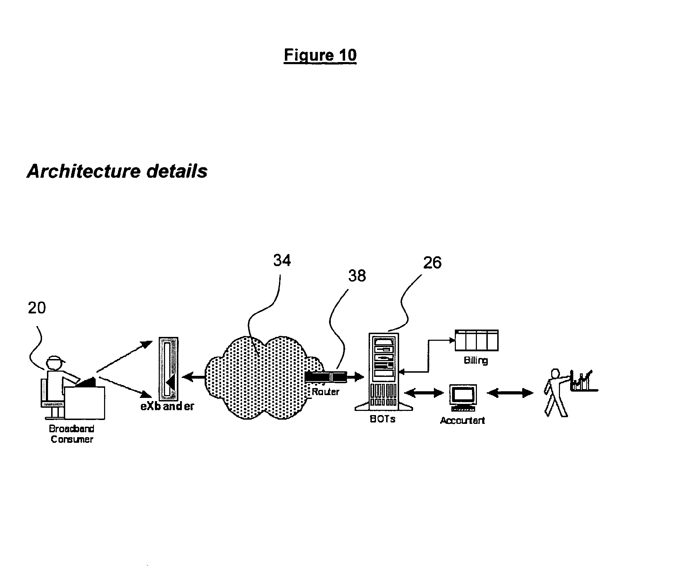

The home bandwidth centre is a combination of all previous generations of the product, with its intended audience the consumer and is shown in Figure 10. It is an application running on a home gateway or the central access point of a household to the Internet. It can predict the quantity and characteristics of bandwidth service required by a household depending on the applications in use. It will auto-negotiate with ISPs to provide this service. It will also ensure the consumer receives the requested and paid for service by analyzing the traffic passing through the gateway.

The following gives details of the internal architecture of the exbander. The solution has been designed to maximize scalability and stability and uses well-known and implemented technologies; it also aims to ensure ease of maintenance. Thus is may be suggested that it is somewhat simplistic. The design enables vertically distribution only as current transaction/messaging technologies are considered not cost effective or unreliable.

The gateway server 28 is built on J2EE technologies and as such can be deployed on most common chip and OS architectures. All consumer requests terminate here. Current deployed Java technologies ensure robustness and extensible components. The server 28 is typically deployed with one active instance; another instance may be deployed in a passive mode to facilitate redundancy.

### JDBC Driver

A JDBC driver 40 is a 3^{rd} party component, which is freely available. It ensures access to the most popular relational databases e.g. Oracle, MySql, Sybase, Postgres, Access. Coupled with EJB (Enterprise Java beans) 42 ensures database access performance comparable to that of ODBC.

### EJB

Enterprise Java beans 42 are a renowned technology. This forms the basis for the model or object layer and have numerous features that facilitate required features like session recovery and introspection.

### Servlets

At this point there are four main servlets 44.

### 1. Session

This servlet 44 creates and destroys sessions.

### 2. ChangeBandwidth

This servlet 44 stores the change bandwidth requests to the database and then sends a request to BOTs 26 to alter the bandwidth. It may be synchronous or asynchronous depending on the client. Its final action is to store the result of request.

### 3. Account Details

Retrieves the account details or redirect the to a customer management portal.

### 4. Messages

This servlet 44 sends and stores consumer and operator messages.

### Watchdog - 46

A watchdog 46 is a thread that is initialized when Tomcat 47 (a third party application server) starts. Its function is to decide if each instance of BOTs 26 is operating correctly, and to inform the bandwidth servlet 44 which instance of BOTs 26 it should contact in relation to load balancing, status or routing issues. The watchdog 46 is independent of all consumer requests.

The BOTs 26 is a high performance software application; it has two processes - a heartbeat and request handler. It is written in ANSI C and as such is portable to most Hardware and OS architectures. Linux (Debian) is chosen as the preferred platform for value and stability.

### BOTs - Request Port - 48

In the BOTs 26 a proprietary protocol is implemented to enable messaging between the gateway server 28 and one or more BOTs 26. The transport layer uses standard TCP/IP sockets. The messages are ASCII text using field length templates to define message formats. The gateway server 26 requests one or more sockets and maintains these connections throughout its operation. The number of sockets is respective to the activity of the server and may be increased at any time.

### BOTs Heartbeat Port - 50

Again in the BOTs 26 a proprietary protocol is implemented. Periodically a message is sent back to the gateway server 26 informing it of the status of the BOTs 26. One of four states is typically reported.

### 1. Operational

BOTs 26 is operating correctly

### 2. Passive

BOTs 26 is in listening mode. But cannot respond to requests yet e.g. it is resuming operation

### 3. Offline

BOTs 26 is unable to respond to requests due to maintenance or malfunction.

### 4. Unstable

An internal error has occurred. If any other BOTs 26 are available they should be utilized.

### Marshalling

A marshalling component 52 routes requests to the correct driver for the destination device.

### Driver Registry

A driver registry 54 loads libraries that implement the API (Application programmatic/protocol interface) to the application layer and then normalizes the API callouts such that they appear heterogeneous to the marshalling component. The drivers shown here are a typical collection of drivers for the cable environment. Typically the drivers are third party API's which have been implemented as a part of BOTs 26.

The DHCP relay agent 130 shown in Figure 13 is used to resolve the IP to MAC (Media access control) and thus resolve which customer is being contacted. The DHCP relay agent 130 is implemented where proxy ARP (Address resolution protocol) requests are not possible. The relay agent 130 relays requests from a head end gateway e.g. DSLAM and passes the request to the DHCP server 56. Such a server can be geographically positioned anywhere; the only constant is that the requests are sent from the user's device to the headend gateway and then to the relay agent, which then brokers the request to the appropriate DHCP server/servers. The DHCP relay agent 130 stores all requests in local memory in a request cache 60, which is accessible via an SNMP agent 58 using the standard snmp_get or snmp_getnext requests.

Exbander's evolution follows a logical path, based on the applicant's vision of the broadband market's future.
1) Make bandwidth a commodity, just like telephone or electricity.
2) Create a methodology for the sale and distribution of the commodity
3) Be able to deal with the commodity in a mass market (Open Access)
4) Trivialize the trading of the commodity to the consumer
5) Shift the focus to quality as the commodity becomes available on mass market and its inherent value decreases

### References

Discussion of cable labs vision for the home gateway - http://www.cablelabs.com/projects/cablehome/downloads/slid eshow.ppt
http://www.opencable.com/
http://www.dslforum.org/latestnews/eMarketer US 06.03.html http://www.dslforum.org/latestnews/analyst corner.html
Iflow Accountant
http://www.siliconaccess.com/products/iAC Product Brief 1. 6 . pdf
Linux packet filter
http://lartc.org/

## Claims

1. A method of adjusting connection characteristics for a connection between a first, user, computer and a remote second computer comprises providing to a user a dynamic connection characteristics user interface for the first computer, which allows the user to adjust one or more connection characteristics dynamically.

2. The method as claimed in claim 1, which includes the user receiving a selected service with no interruption to the service other than changing the connection characteristics.

3. The method of claim 1 or claim 2, in which the connection characteristics include a connection bit rate.

4. The method of any preceding claim, in which the user's computer is a personal computer, a set top box, a gaming console, a personal digital assistant (PDA), an advanced telephone or any IP aware network device.

5. The method of any preceding claim, in which the user interface indicates a bandwidth/connection bit rate and a cost for a particular bandwidth/connection bit rate.

6. The method of any preceding claim, which includes a user paying in advance for a given amount of connection characteristic variability.

7. The method of claim 7, in which the payment in advance for be for a given connection bit rate.

8. The method of any preceding claim, in which the allocation of connection characteristics is performed by a bandwidth broker remote from a user.

9. The method of claim 8, in which the bandwidth broker is operable to control a user connection device to allow a given connection characteristic.

10. The method of any preceding claim, in which a user's connection characteristics are changed dynamically, without having to reset a user's connection equipment

11. A bandwidth broker as described in any one of claims 1 to 10.

12. A system for adjusting connection characteristics between remote computers comprises:
a user computer; and
a service provider computer;
wherein the user computer is provided with a dynamic connection characteristics user interface, that is operable by a user to adjust at least one connection characteristic dynamically.

13. A method of analysing requests for dynamic adjustment of connection characteristics comprises:
logging requests for given connection characteristics from a plurality of users, including a time of said requests; deriving a level of demand for at least one level of connection bandwidth; and
setting a cost of said connection characteristics based on said level of demand.

14. The method of claim 13, in which the connection characteristics include duration, cost amount, type of traffic, requested services, and/or connection utilisation.

15. The method of either claim 13 or claim 14, which includes determining one or more of the following features: average rate of change of user uptake of a given connection characteristic, user uptake of given connection characteristics at given times, trend analysis of user uptake of given connection characteristics in response to the setting of a particular cost, and/or the number of users commencing use of or ending use of an offered connection characteristic.

16. A method of offering given services based on a dynamic connection characteristic that a user is using.

17. A method is provided by which at least one of a user's connection characteristics are automatically adjusted according to the requirement of a particular application being used by the user.

18. The method of claim 17, in which the user's connection characteristics are provided by one of a plurality of potential service providers.
